# EUROPÄISCHE PATENTSCHRIFT

(11) **EP 0 468 338 B1**
(45) Veröffentlichungstag und Bekanntmachung des Hinweises auf die Patenterteilung: **03.04.1996**
(21) Anmeldenummer: 91111817.2
(22) Anmeldetag: 16.07.1991
(51) Int. Cl.: B02C 18/18, B02C 18/14

(54) **Vorrichtung zum Zerkleinern von faserigem oder granulatartigem Haufwerk wie Müll**
Apparatus for disintegrating fibrous or granular bulk material such as refuse
Appareil de broyage pour matières en vrac fibreuses ou granulaires comme des déchets

(30) Priorität: 26.07.1990 DE 4023710
(43) Veröffentlichungstag der Anmeldung: 29.01.1992
(73) Patentinhaber: Bürklin, Werner, CH-8280 Kreuzlingen (CH)
(72) Erfinder: Bürklin, Werner, CH-8280 Kreuzlingen (CH)
(74) Vertreter: Hiebsch, Gerhard F., Dipl.-Ing.

(56) Entgegenhaltungen:
- EP-A- 0 249 276
- DE-A- 1 607 475
- FR-A- 2 542 632
- GB-A- 896 928

## Beschreibung

Die Erfindung betrifft eine Vorrichtung zum Zerkleinern von faserigem oder granunlatartigem Haufwerk wie Müll mit zumindest nach dem Oberbegriff des unabhängigen Patentanspruches.

Eine Vorrichtung zur Zerkleinerung und Aufbereitung von Abfallstoffen wie Müll beschreibt die EP-PS 0 003 779 und weist verschiedene Mängel auf, durch welche zum einen ihre Standzeit bzw. Lebensdauer sowie zum anderen ihr Wirkungsgrad sehr begrenzt wird. Wie sich gezeigt hat, verschleißen die als Zerkleinerungswerkzeuge dienenden radialen Schlagstäbe nach verhältnismäßig geringer Standzeit und müssen dann mit erheblichem Aufwand herausgebrochen werden. Sie sind je nach Behandlung oft schon nach wenigen Tagen verschließen und vermögen dann ihre Aufgabe, Müllteile zu zerkleinern, nicht mehr zu erfüllen. Die meisten mit der Vorrichtung zu bearbeitenden Behandlungsgüter enthalten stark schmiergelnde Bestandteile, welche nicht nur die Schlagstäbe sehr rasch abnutzen, sondern auch in die Lager eindringen und diese bald zerstören.

In der Praxis hat sich gezeigt, daß -- von der Zerstörung der Zerkleinerungswerkzeuge abgesehen -- der Wirkungsgrad derartiger Aggregate insgesamt verhältnismäßig niedrig bleibt.

Die DE-A-1 607 475 beschreibt eine gattungsgemäße Zerkleinerungsmaschine mit tangential auf einer umlaufenden Trommel in Sägezahnausschnitten durch Schrauben befestigten Messerkörpern, in deren eine Flanke unter Bildung der Schneidkante eine Rinne eingeformt ist, die andere Wandung dieser Rinne wird von einem Auflagerfortsatz des Messerkörpers bestimmt.

Angesichts dieser Gegebenheiten hat sich der Erfinder das Ziel gesetzt, den Wirkungsgrad einer solchen Zerkleinerungsvorrichtung zu verbessern und vor allem ihre Standzeit zu erhöhen. Ganz wesentlich ist dabei, den Rotor derart auszubilden, daß vor allem die Zerkleinerungswerkzeuge nicht zu häufig unbrauchbar werden und dadurch lange Betriebsunterbrechungen entstehen.

Zur Lösung dieser Aufgabe führt die Lehre des unabhängigen Patentanspruches, die abhängigen Ansprüche geben günstige Weiterbildungen an.

Erfindungsgemäß bilden auf einer Welle nebeneinander angeordnete Zahnscheiben mit sägeblattartig ausgebildetem Umfang den Rotor, und die Blockeinsätze sitzen jeweils in Nuten der Zahnscheiben; diese Nuten sind quer zur Drehrichtung querschnittlich hinterschnitten und nehmen jeweils einen entsprechenden Teil des Blockeinsatzes auf, bei dem vier parallele Kanten die Flanken mit beidseits einer Mittellinie zu dieser geneigten Flankenabschnitten bestimmen sowie beide Flankenabschnitte einer Flanke sich einer querschnittlich V-förmigen Wand des Sägezahnes bzw. der Zahnscheibe anlegen. Deren unterer Abschnitt bildet eine der Nutwände, und der untere Bereich der anderen Flanke des Blockeinsatzes schmiegt sich an die andere Nutwand an.

Die also quer zur Drehrichtung querschnittlich hinterschnittenen Nuten nehmen jeweils einen entsprechend geformten Teil des Blockeinsatzes formschlüssig auf, so daß es besonderer Befestigungsmittel nicht bedarf; bei der Gestalt des Blockeinsatzes bestimmen vier parallele Kanten Flanken mit beidseits einer Mittellinie zu dieser geneigten Flankenabschnitten; von dieser Mittellinie ab beschreiben die Flanken das Gegenstück zu der Hinterschneidungsform der Einsatznut.

Zudem hat es sich als günstig erwiesen, daß die Flankenabschnitte jeweils zur benachbarten Fläche des Blockeinsatzes in einem Winkel von beispielsweise etwa 70° geneigt sind, wobei die Wahl des Neigungs- bzw. Hinterschneidungswinkels von der Beanspruchung des Blockeinsatzes und den gewählten Werkstoffen abhängt.

Die Mittellinie bestimmt eine durch zwei Querkerben des Blockeinsatzes gelegte Symmetrieebene, beidseits deren gleiche Blockformen bestehen, so daß der Blockeinsatz mit beiden durch jene Mittelebene bestimmten Blockteilen in die hinterschnittene Nut eingesetzt zu werden vermag.

Da erfindungsgemäß auch die Querebene zur Mittellinie eine Symmetrieebene ist, entstehen vier gleichgeformte Blockabschnitte, deren jeder eine Schneidkante trägt, wodurch eine vierfache Verwendung dieses als Messerblock wirkenden Blockeinsatzes möglich ist.

Im Zentrum des Blockeinsatzes oder Messerblockes befinden sich in einer gemeinsamen Achse Ausnehmungen zur Aufnahme eines Schraubbolzens; von den beiden einanander gegenüberliegenden Blockoberflächen gehen jeweils sich einwärts verjüngende Ausnehmungen aus, welche im Abstand zur Mittelebene des Messerblockes Ringschultern bilden, die von einer engen Mittelausnehmung verbunden sind; deren Durchmesser entspricht dem Durchmesser eines Schraubbolzens, der mit seinem Kopf in einer der beiden weiteren Ausnehmungen lagert, und dessen Schaft in eine Gewindebüchse eingreift, die in der anderen weiten Ausnehmung sitzt. Vorteilhafterweise überragt dann das freie Ende des Schaftes den Messerblock, so daß dieses freie Ende bei eingesetztem Messerblock als Anschlag oder Raste in ein Sacklock des Nuttiefsten eingreift.

Nach einem weiteren Merkmal der Erfindung verlaufen in einer Diametralebene der Ausnehmungen in den diese umgebenden Wänden --bevorzugt parallel zu den Schneidkanten -- Schlitzungen, die als Sackschlitze in Abstand zu den Blockoberflächen enden. Diese Schlitze bringen eine gewisse und einstellbare Flexibilität des metallischen Messerblockes mit sich, die insbesondere beim Einspannen in die hinterschnittene Nut von Bedeutung ist; die beiden zeitweise an der freien Oberfläche des Messerblockes angeordneten Schlitze können von Distanzhaltern verschlossen werden, beispielsweise auch durch Schweißraupen.

Im Rahmen der Erfindung, jedoch für sich selbständig schützbar, liegt der Gedanke, das beschriebene Zerkleinerungorgan oder eine entsprechend Einrichtung einem Förderorgan einer Kompostmiete, bevorzugt einer letztere übergreifenden verfahrbaren Kompostbrücke vorzuschalten - dies vorteilhafterweise in Kombination mit von der Kompostbrücke vertikal in die Kompostmiete einführbaren Hohlspindeln, die erfindungsgemäß perforiert und mit ihrem oberen Ende an eine Flüssigkeits- und/oder Luftführung angeschlossen sind.

Der Boden dieser Hohlspindeln ist geschlossen und ihr Innenraum erfindungsgemäß über eine Hohlwelle, eine drehbare Kupplung und ein Luftrohr an ein Gebläse angeschlossen, so daß in die Kompostmiete Luft eingedüst werden kann, auch ist es möglich, wahlweise Flüssigkeit in die Kompostmiete zu leiten, wodurch eine starke Belüftung und Befeuchtung der Kompostmiete während des Auflockerns erreicht wird.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: die Draufsicht auf eine Rotorschneidmühle;
- Fig. 2:: die Seitenansicht dazu;
- Fig. 3:: einen Schnitt durch Fig. 1 nach deren Linie III - III;
- Fig. 4:: ein Detail der Rotorschneidmühle im Schnitt mit auf einer Welle sitzenden Zahnscheiben;
- Fig. 5:: die Seitenansicht einer Zahnscheibe mit Zahneinsätzen;
- Fig. 6:: die Stirnansicht zu Fig. 5;
- Fig. 7:: einen teilweise geschnittenen Zahneinsatz in Seitenansicht;
- Fig. 8:: einen teilweise geschnittenen Zahneinsatz in Draufsicht;
- Fig. 9:: eine Skizze in Frontansicht zu einer Anlage mit integrierter Rotorschneidmühle;
- Fig. 10, 11:: Seiten- und Frontansicht einer anderen Anlage.

Eine Rotorschneidmühle 10 weist in einem Gehäuse 12 an Wellen 14 und 16, deren Antriebe mit 18 bezeichnet sind, Zahnscheiben 20 auf.

Die beiden Wellen 14,16 drehen gegenläufig, so daß ein Einlaufspalt 19 für das in Aufgaberichtung x in das Gehäuse 12 fallende sowie oberhalb der Zahnscheiben 20 vorzerkleinerte und eingezogene Aufgabegut gebildet wird. Dessen vertikale Fallrichtung zeigt Pfeilrichtung x.

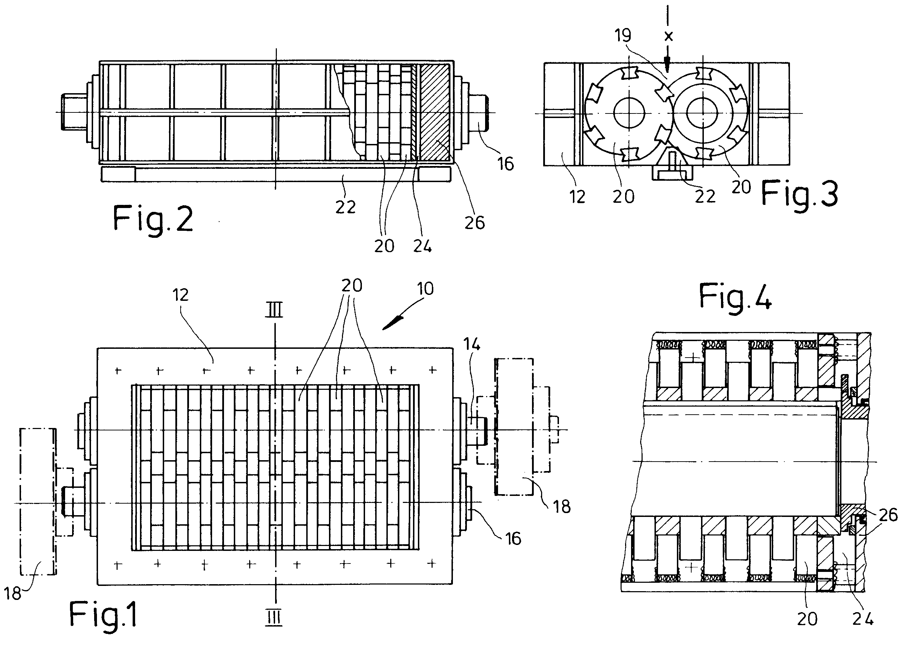

Auf der dem Einlaufspalt 19 gegenüberliegenden unteren Seite befindet sich ein Messerbalken 22, der in vertikaler Richtung verstellbar, also relativ zu dem zwischen den Zahnscheiben 20 vorhandenen Förderspalt einstellbar ist. In Fig. 2,4 ist mit 24 ein Luftspalt zwischen den drehenden Zahnscheiben 20 und einer Lagergruppe 26 bezeichnet. Dieser Luftspalt 24 verhindert Beschädigungen an der Lagergruppe 26, welche dadurch entstehen können, daß Rohmaterial durch die rotierenden Zahnscheiben 20 und ein feststehendes Verschleißblech gequetscht wird. Das austretende Rohmaterial kann durch einen Luftspalt abgefördert werden, wodurch eine Sandwichdichtung erreicht wird.

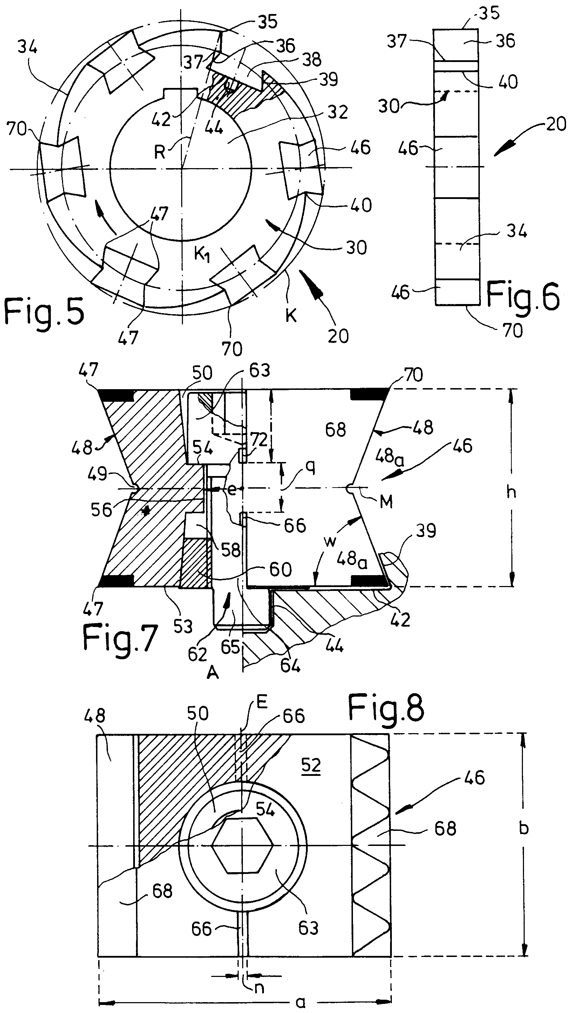

Die Fig. 5, 6 lassen den Aufbau der Zahnscheibe 20 deutlich erkennen. Der Zahnscheibenkörper ist ein Ring 30 mit Achsbohrung 32 und einer sägescheibenartig gestalteten Umfangskante 34. Jede Sägezahnspitze der Seitenansicht nach Fig. 5 erscheint in Frontansicht als Sägezahnkante 35, von der eine Zahnfront 36 ausgeht. Diese begrenzt mit einer durch die Sägezähnkante 35 gelegten Radiallinie R im Querschnitt ein gleichschenkliges Dreieck und bildet dabei eine mittige Kammlinie 37. Unterhalb deren springt die Zahnflanke 36 zur Radiallinie R zurück als Seitenwandung einer hinterschnittenen Nut 38, deren andere Seitenwand 39 nach oben hin an einer Kante 40 endet, an welcher der nächste "Sägezahn" beginnt. Im Nuttiefsten 42 ist in dessen Quermitte ein Sackloch 44 vorgesehen.

Die hinterschnittene Nut 38 nimmt einen Messerblock 46 auf, der in Fig. 7,8 im wesentlichen quaderförmig ausgebildet ist mit einer beispielsweisen Höhe h von 75 mm, einer Breite b von 90 mm und einer Länge a von 115 mm. Vier parallele Kanten 47,70 dieses Messerblockes 46 bestimmten zwei Flankenflächen 48, die beidseits einer durch eine Mittellinie M gelegten Ebene zu dieser hin geneigt und somit querschnittlich V-förmig gestaltet sind, so daß der Messerblock 46 gemäß Seitenansicht der Fig. 7 beidseits schwalbenschwanzförmige Konturen besitzt. Die Neigungswinkel w der Flankenabschnitte 48ₐ messen etwa 70°. Der sich querschnittlich verjüngende Teil des Messerblocks 46 entspricht in seiner Kontur der Formgebung der Zahnflanke 36, so daß ein in die Nut 38 eingeschobener Messerblock 46 mit einer seiner Flankenabschnitte 48ₐ jener Zahnflanke 36 anliegt, während der untere Bereich der anderen Flanke 48 des Messerblockes 46 sich an die Nutwand 39 anschmiegt. Der Messerblock 46 ist somit in der Nut 38 der Zahnscheibe 20 klemmend festlegbar.

Der Messerblock 46 weist eine mittige Ausnehmung 50 auf, welche sich von der Oberfläche 52 des Messerblocks 46 nach unten hin in einem Bereich i konisch etwas verjüngt bis zu einem schulterartigen Ringabsatz 54 eines Innenradius e von 18 mm, von dem eine zylindrische Bohrung 56 der axialen Länge q (etwa 14 mm) ausgeht. Die durch die Spitze des V-förmigen Querschnittes der Flanken 48 und durch ein Paar von Querkerben 49 gelegte Mittellinie M bestimmt eine Symmetrieebene der Blockgestalt, so daß die zylindrische Bohrung 56 auf der anderen Seite dieser Symmetrieebene in eine sich zur Unterfläche 53 des Messerblockes 46 hin erweiternde Ausnehmung 58 übergeht, die eine Gewindebüchse 60 aufnimmt.

In Fig. 7,8 ist ein Schraubbolzen 62 mit in jener Ausnehmung 50 ruhenden Innensechskantkopf 63 zu erkennen; letzterer sitzt auf dem Ringabsatz 54 auf, wenn der Schaft 64 des Schraubbolzens 62 in seine Gewindebüchse 60 eingeschraubt ist und mit seinem freien Ende 65 in das beschriebene Sacklock 44 eingreift.

Der Schraubbolzen 62 hat so zum einen die Funktion eines Rastorgans, zum anderen dient er zum Festklemmen des Messerblockes 46 in der hinterschnittenen Nut 38; im Bereich der beiden Ausnehmungen 50,58 ist der Messerblock 46 in einer durch die Schraubenachse A gelegten Diametralebene E aufgeschlitzt, bei einer anderen Ausführungsform durchtrennt, also in zwei Hälften geteilt.

In der Draufsicht der Fig. 8 sind die von den Ausnehmungen 50, 58 ausgehenden Schlitze 66 einer Breite n von z. B. 4 mm deutlich zu erkennen. Nachdem der Messerblock 46 in seine hinterschnittene Nut 38 eingeschoben ist, wird der Schraubbolzen 62 festgeschraubt und spreizt dabei geringfügig die untere Hälfte des Messerblockes 46 dank der dort befindlichen Radialschlitze 66.

An den von den Flächen 52 und 53 einerseits sowie den Flanken 48 andererseits gebildeten Ecken sind streifenförmige Hartmetalleinsätze 68 zu erkennen, von denen drei schonend den Nutwänden 36,39 bzw. der Zahnflanke 36 anliegen, während die in Fig. 7 mit 70 bezeichnete Messerblockkante die Schlag- bzw. Schneidkante des Messerblockes 46 bildet. In Fig. 5 ist mit K ein Kreis als geometrischer Ort aller Messerblockkanten 70 angedeutet, Kreis K₁ ist der geometrische Ort der Mittelpunkte der Messerblocks 46.

Um ein Federn des Messerblockes 46 im Bereich seiner Oberfläche 52 während der Scheibendrehung und einer Berührung der Messerblockkante 70 mit Aufgabegut zu verhindern, sind in die nach oben gerichteten Schlitze 66 Distanzstreifen 72 eingelegt, welche ein Verengen des Schlitzes 66 durch äußere Kräfte verhindern. Statt solcher Distanzeinlagen 72 können auch Schweißraupen angeordnet werden.

Es wird deutlich, daß die Messerblöcke 46 problemlos eingesetzt, ausgewechselt und die aktiven Messerblockkanten 70 gedreht werden können. Durch letztgenannte Drehung können alle Hartmetalleinsätze 68 eines Messerblockes 46 zur Messerblockkante 70 werden, was einer vierfachen Standzeit des Zahnes gleichkommt.

Nicht wiedergegeben ist eine Ausführungsform der Zahnscheibe 20, bei der die einzelnen Messerblöcke 46 eingeschraubt sind, wozu eine nicht dargestellte Spezialhalterung in den einzelnen Messerblöcken 46 vorhanden ist; ein Festschrauben in den einzelnen Zahnscheiben 20 ist nicht möglich, da zu hohe Kräfte auf die Schrauben und Gewinde wirken; bei zerstörtem Gewinde können die Zahnscheiben nicht mehr repariert werden.

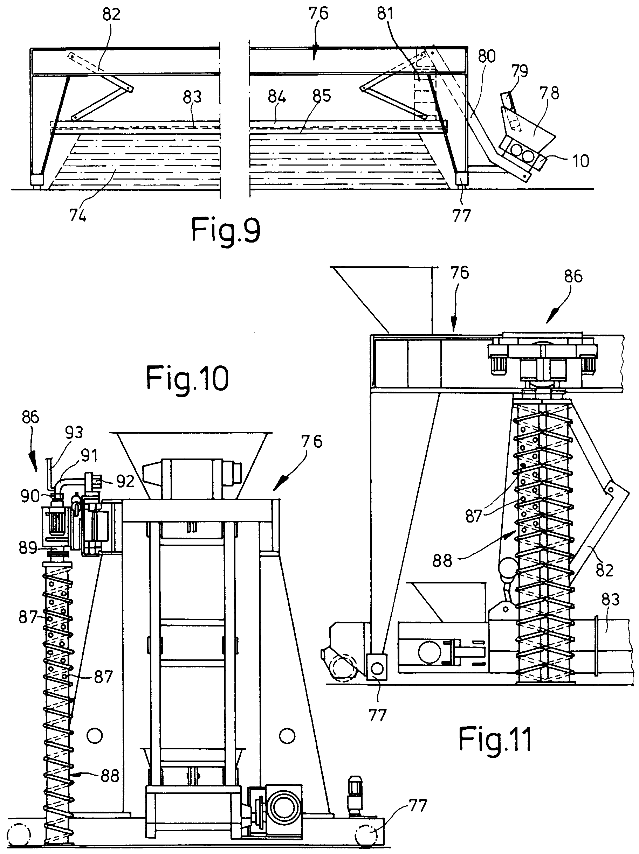

Gemäß Fig. 9 ist die Rotorschneidmühle 10 als Vorzerkleinerung einer portalartigen, über einer Kompostmiete 74 verfahrbaren Kompostbrücke 76 vorgeschaltet, die auf Fahrwerken 77 beidseits der Kompostmiete 74 verfahrbar ist. Auf der Rotorschneidmühle 10 ist ein Zuführtrichter 78 mit Zuführstößel 79 angebracht. Diese Aggregate und die von eine Stielförderer 80, beispielsweise einem Ketten-, Band- oder Stegförderer, untergriffene Rotorschneidmühle 10 sind an die Kompostbrücke 76 angebaut.

Der Steilförderer 80 fördert das zerkleinerte Haufwerk in einen Teleskopschacht 81, aus den er auf einen -- an Hubvorrichtungen 82 höhenverstellbaren -- Querförderer 83 mit Abstreifeinrichtung 84 über einem Siebboden 85 fällt.

Fig. 10 zeigt ein Auflockerungsgerüst 86 mit zwei -- seitliche Lochungen 87 aufweisenden -- Spindel 88, deren Boden geschlossen ist. Der Innenraum dieser Hohlspindel/n 88 ist über eine Hohlwelle 89, eine drehbare Kupplung 90 und ein Luftrohr 91 an e0in Gebläse 92 angeschlossen. Auch führt eine sperrbare Wasserleitung 93 in die Hohlwelle 89, um wahlweise Flüssigkeit in den Luftstrom einzudüsen. Mit diesem Auflockerungsgerät 86 wird eine starke Belüftung und Befeuchtung der Kompostmiete 74 während des Auflockerns erreicht.

## Patentansprüche

1. Vorrichtung zum Zerkleinern von faserigem oder granulatartigem Haufwerk wie Müll mit zumindest einem Rotor, von dem Schneidwerkzeuge etwa radial abragen, wobei der Rotor einen sägeblattartig ausgebildeten Umfang (34) aufweist sowie die in Drehrichtung weisenden Schneidkanten des Rotors jeweils durch eine Kante (70, 47) eines am Rotor austauschbar festliegenden und von einer Quaderform begrenzten Blockeinsatzes (46) gebildet sind, wobei die Schneidkante von einer Flanke des Blockeinsatzes abragt,
dadurch gekennzeichnet,
daß auf einer Welle (14,16) nebeneinander angeordnete Zahnscheiben (20) mit sägeblattartig ausgebildetem Umfang den Rotor bilden und die Blockeinsätze (46) jeweils in Nuten (38) der Zahnscheiben sitzen, die quer zur Drehrichtung querschnittlich hinterschnitten sind und jeweils einen entsprechenden Teil des Blockeinsatzes aufnehmen, bei dem vier parallele Kanten (47,70) die Flanken (48) mit beidseits einer Mittellinie (M) zu dieser geneigten Flankenabschnitten (48ₐ) bestimmen sowie beide Flankenabschnitte (48ₐ) einer Flanke (48) sich einer querschnittlich V-förmigen Wand des Sägezahnes bzw. der Zahnscheibe (20) anlegen, deren unterer Abschnitt (36) eine der Nutwände bildet, und der untere Bereich der anderen Flanke des Blockeinsatzes sich an die andere Nutwand (39) anschmiegt.

2. Vorrichtung nach Anspruch 1, dadurch gekennzeichnet, daß die Mittellinie (M) eine durch zwei Querkerben (49) des Blockeinsatzes (46) gelegte Symmetrieebene bestimmt.

3. Vorrichtung nach Anspruch 1 oder 2, dadurch gekennzeichnet, daß die Flankenabschnitte (48ₐ) jeweils zur benachbarten Fläche (52, 53) des Blockeinsatzes (46) in einem Winkel (w) von bevorzugt etwa 70° geneigt sind.

4. Vorrichtung nach Anspruch 1, dadurch gekennzeichnet, daß die vier parallelen Kanten (47, 70) der Flanken (48) durch Schneideinsätze (68) gebildet sind, von denen einer eine Schneidkante (70) des Blockeinsatzes (46) bestimmt.

5. Vorrichtung nach einem der Ansprüche 1 bis 4, gekennzeichnet durch mittige koaxiale Ausnehmungen (50, 56, 58) des Blockeinsatzes (46) für einen Schraubbolzen (62), dessen Kopf (63) bevorzugt in einer Ausnehmung (50) lagert, dessen Schaft (64) bevorzugt in einer Gewindebüchse (60) sitzt und das freie Schaftende (65) die Unterfläche (53) des Blockeinsatzes (46) überragt.

6. Vorrichtung nach Anspruch 1, dadurch gekennzeichnet, daß das Tiefste (42) der hinterschnittenen Nut (38) wenigstens eine Sackausnehmung (44) für das freie Schaftende (65) des Schraubbolzens (62) aufweist.

7. Vorrichtung nach Anspruch 5 oder 6, dadurch gekennzeichnet, daß die Ausnehmung (56) im Bereich der Mittellinie (M) des Blockeinsatzes (46) von engerem Durchmesser ist als die mit ihr Ringschultern (54) bildenden beidseits anschließenden Ausnehmungen (50, 58), wobei gegebenenfalls der Radius (e) der engen Ausnehmungen etwa dem des Schaftes (64) entspricht und deren Länge (q) bevorzugt kürzer ist als die Tiefe (i) der anschließenden Ausnehmungen (50, 58).

8. Vorrichtung nach einem der Ansprüche 5 bis 7, dadurch gekennzeichnet, daß von den weiten Ausnehmungen (50,58) beidseits Schlitze (66) im Blockeinsatz (46) ausgehen, die gegebenenfalls eine Symmetrieebene (E) des Blockeinsatzes (46) bestimmen, und/oder radial zu den Ausnehmungen (50,58) verlaufen sowie in Abstand zu den Oberflächen (52,53) des Blockeinsatzes (46) enden.

9. Vorrichtung nach einem der Ansprüche 5 bis 8, dadurch gekennzeichnet, daß die Länge (q) der engen Ausnehmung (56) einen ungeschlitzten Bereich des Blockeinsatzes (46) bestimmt, und/oder, daß in wenigstens einem der Schlitze (66) ein Distanzhalter (72) angeordnet ist.

10. Vorrichtung nach einem der Ansprüche 1 bis 7, dadurch gekennzeichnet, daß der Blockeinsatz (46) in einer diametralen Ebene (E) in zwei Hälften geteilt ist, die bevorzugt durch die Sackausnehmung (44) gelegt und Symmetrieebene ist.

11. Vorrichtung nach einem der Ansprüche 1 bis 10, dadurch gekennzeichnet, daß die Blockeinsätze (46) einer Zahnscheibe (20) in axialer Richtung von den Blockeinsätzen einer benachbarten Zahnscheibe seitlich übergriffen sind, wobei gegebenenfalls die Schneidkanten (70) benachbarter Zahnscheiben (20) Schraubenlinien um die Welle (14,16) bilden.

12. Vorrichtung nach einem der Ansprüche 1 bis 11, gekennzeichnet durch eine endwärtige Lagergruppe für die Welle (14, 16), wobei zwischen der Lagergruppe (26) und der benachbarten Zahnscheibe (20) ein Luftspalt (24) verläuft.

13. Vorrichtung nach einem der Ansprüche 1 bis 12, gekennzeichnet durch wenigstens zwei miteinander einen Einzugspalt begrenzenden Rotoren aus den Zahnscheiben (20).

14. Vorrichtung nach wenigstens einem der Ansprüche 1 bis 13, dadurch gekennzeichnet, daß sie als Zerkleinerungsorgan (10) einem Förderorgan (80,83) einer Kompostmiete (76) vorgeordnet ist.

15. Vorrichtung nach wenigstens einem der Ansprüche 1 bis 14, dadurch gekennzeichnet, daß sie als Zerkleinerungsorgan (10) einer eine Kompostmiete (74) übergreifenden verfahrbare Kompostbrücke (76) vorgeschaltet ist, und/oder, daß von der Kompostbrücke (76) in die Kompostmiete (74) wenigstens eine perforierte Hohlspindel (88) ragt, die mit ihrem oberen Ende an eine Flüssigkeit- und/oder Luftzuführung (91,93) angeschlossen ist.

## Claims

1. Apparatus for comminuting fibrous or granular heaped material such as refuse with at least one rotor from which cutting tools project more or less radially, wherein the rotor has a saw blade-like periphery (34) and also the cutting edges of the rotor pointing in the direction of rotation are in each case formed by an edge (70, 47) of a block insert (46) fixed exchangeably to the rotor and bounded by a cuboid shape, wherein the cutting edge projects from one flank of the block insert, characterised in that crown gears (20) with saw blade-like periphery arranged adjacent to each other on a shaft (14, 16) form the rotor and the block inserts (46) are in each case mounted in grooves (38) of the crown gears which are cross-sectionally undercut transversely to the direction of rotation and in each case receive a corresponding portion of the block insert, in which four parallel edges (47, 70) define the flanks (48) with flank sections (48ₐ) inclined on both sides of and relative to a centre line (M) and also both flank sections (48ₐ) of a flank (48) are applied to a wall of the sawtooth or crown gear (20) of V-shaped cross-section, of which the lower section (36) forms one of the groove walls, and the lower region of the other flank of the block insert fits snugly against the other groove wall (39).

2. Apparatus according to claim 1, characterised in that the centre line (M) defines a plane of symmetry passing through two transverse notches (49) of the block insert (46).

3. Apparatus according to claim 1 or 2, characterised in that the flank sections (48ₐ) are in each case inclined to the adjacent face (52, 53) of the block insert (46) at an angle (w) of preferably about 70°.

4. Apparatus according to claim 1, characterised in that the four parallel edges (47, 70) of the flanks (48) are formed by cutting inserts (68), one of which defines a cutting edge (70) of the block insert (46).

5. Apparatus according to any of claims 1 to 4, characterised by central coaxial recesses (50, 56, 58) of the block insert (46) for a screw bolt (62) of which the head (63) is preferably mounted in a recess (50) and of which the shank (64) is preferably mounted in a threaded bush (60) and the free shank end (65) protrudes beyond the lower face (53) of the block insert (46).

6. Apparatus according to claim 1, characterised in that the bottom (42) of the undercut groove (38) comprises at least one blind recess (44) for the free shank end (65) of the screw bolt (62).

7. Apparatus according to claim 5 or 6, characterised in that the recess (56) in the region of the centre line (M) of the block insert (46) is of narrower diameter than the recesses (50, 58) forming ring shoulders (54) with it and adjoining on both sides, wherein if occasion arises the radius (e) of the narrow recesses approximately corresponds to that of the shank (64) and their length (q) is preferably shorter than the depth (i) of the adjoining recesses (50, 58).

8. Apparatus according to any of claims 5 to 7, characterised in that slots (66) in the block insert (46) extend from the wide recesses (50, 58) on both sides and if occasion arises define a plane of symmetry (E) of the block insert (46), and/or extend radially to the recesses (50, 58) and also end at a distance from the surfaces (52, 53) of the block insert (46).

9. Apparatus according to any of claims 5 to 8, characterised in that the length (q) of the narrow recess (56) defines an unslotted region of the block insert (46) and/or in that a spacer (72) is arranged in at least one of the slots (66).

10. Apparatus according to any of claims 1 to 7, characterised in that the block insert (46) is split into two halves in a diametrical plane (E) which preferably passes through the blind recess (44) and is the plane of symmetry.

11. Apparatus according to any of claims 1 to 10, characterised in that the block inserts (46) of one crown gear (20) are overlapped laterally in an axial direction by the block inserts of an adjacent crown gear, wherein if occasion arises the cutting edges (70) of adjacent crown gears (20) form helical lines around the shaft (14, 16).

12. Apparatus according to any of claims 1 to 11, characterised by an end bearing assembly for the shaft (14, 16), wherein an air gap (24) extends between the bearing assembly (26) and the adjacent crown gear (20).

13. Apparatus according to any of claims 1 to 12, characterised by at least two rotors together defining a draw-in gap and consisting of the crown gears (20).

14. Apparatus according to one or more of claims 1 to 13, characterised in that it is arranged as a comminuting member (10) in front of a conveying member (80, 83) of a compost heap (76).

15. Apparatus according to one or more of claims 1 to 14, characterised in that it is mounted as a comminuting member (10) in front of a movable compost bridge (76) overlapping a compost heap (74) and/or in that at least one perforated hollow spindle (88) which is connected by its upper end to a liquid and/or air supply (91, 93) extends from the compost bridge (76) into the compost heap (74).

## Revendications

1. Dispositif pour le broyage de débris fibreux ou sous forme de granulés tels que des ordures ménagères, comportant au moins un rotor, duquel des outils de découpe font saillie sensiblement radialement, le rotor présentant un pourtour (34) ayant la configuration d'une lame de scie et les arêtes coupantes du rotor orientées dans le sens de rotation comprenant chacune une arête (70,47) d'un élément de bloc (46) fixé sur le rotor de manière à pouvoir être remplacé et délimité par une forme parallélépipédique, l'arête de découpe faisant saillie depuis un flanc de l'élément de bloc,
caractérisé en ce que
des disques dentés (20) disposés les uns à côté des autres sur un arbre (14,16) constituent le rotor avec un pourtour ayant la configuration d'une lame de scie et en ce que les éléments de bloc (46) sont logés chacun dans des rainures (38) des disques dentés, qui sont contre-dépouillées en travers transversalement au sens de rotation, et reçoivent chacune une partie correspondante de l'élément de bloc, partie sur laquelle quatre arêtes parallèles (47,70) définissent les flancs (48) avec une ligne médiane (M) de chaque côté par rapport à ces segments de flans inclinés (48ₐ) et les deux segments de flan (48ₐ) d'un flan (48) sont placés contre une paroi en travers en forme de V de la dent de scie ou du disque denté (20), paroi dont le segment inférieur (36) constitue l'une des parois de rainure, et la zone inférieure de l'autre flan de l'élément de bloc épouse la forme de l'autre paroi de rainure (39).

2. Dispositif selon la revendication 1, caractérisé en ce que la ligne médiane (M) définit un plan de symétrie déterminé par deux encoches transversales (49) de l'élément de bloc (46).

3. Dispositif selon la revendication 1 ou 2, caractérisé en ce que les segments de flan (48ₐ) sont chacun inclinés d'un angle (W) d'environ 70° de préférence, par rapport à la surface adjacente (52,53) de l'élément de bloc (46).

4. Dispositif selon la revendication 1, caractérisé en ce que les quatre arêtes parallèles (47,70) des flans (48) sont constituées d'éléments de découpe (68) dont l'un définit une arête de découpe (70) de l'élément de bloc (46).

5. Dispositif selon l'une des revendications 1 à 4, caractérisé par des évidements coaxiaux centraux (50,56,58) de l'élément de bloc (46) pour un boulon fileté (62) dont la tête (63) est logée de préférence dans un évidement (50) et dont la tige (64) est logée de préférence dans une douille taraudée (60) et en ce que l'extrémité libre (65) de la tige dépasse de la face inférieure (53) de l'élément de bloc (46).

6. Dispositif selon la revendication 1, caractérisé en ce que le fond (42) de la rainure contre-dépouillée (38) présente au moins un évidement (44) en forme de poche pour l'extrémité libre (65) de la tige du boulon fileté (62).

7. Dispositif selon la revendication 5 ou 6, caractérisé en ce que l'évidement (56) est de diamètre plus étroit dans la zone de la ligne médiane (M) de l'élément de bloc (46) que les évidements (50,58) formant avec lui des épaulements annulaires (54) et s'y raccordant des deux côtés, le rayon (e) des évidements étroits correspondant éventuellement sensiblement à celui de la tige (64) et sa longueur (q) étant de préférence plus courte que la profondeur (i) des évidements (50,58) s'y raccordant.

8. Dispositif selon l'une des revendications 5 à 7, caractérisé en ce que dans l'élément de bloc (46), des fentes (66) partent des deux côtés des évidements larges (50,58), lesquelles fentes définissent éventuellement un plan de symétrie (E) de l'élément de bloc (46), et/ou s'étendent radialement par rapport aux évidements (50,58) et se terminent à distance des surfaces (52,53) de l'élément de bloc (46).

9. Dispositif selon l'une des revendications 5 à 8, caractérisé en ce que la longueur (q) de l'évidement étroit (56) définit une zone non fendue de l'élément de bloc (46) et/ou en ce qu'une pièce formant support d'espacement (72) est associée à au moins l'une des fentes (66).

10. Dispositif selon l'une des revendications 1 à 7, caractérisé en ce que l'élément de bloc (46) est divisé en deux moitiés dans un plan diamétral (E) qui est de préférence déterminé par l'évidement en forme de poche (44) et constitue un plan de symétrie.

11. Dispositif selon l'une des revendications 1 à 10, caractérisé en ce que les éléments de bloc (46) d'un disque denté (20) sont chevauchés dans le sens axial par les éléments de bloc d'un disque denté adjacent, les arêtes de découpe (70) de disques dentés (20) adjacents formant éventuellement des hélices autour de l'arbre (14,16).

12. Dispositif selon l'une des revendications 1 à 11, caractérisé par un groupe formant palier pour l'arbre (14,16), un jeu (24) étant ménagé entre le groupe formant palier (26) et le disque denté voisin (20).

13. Dispositif selon l'une des revendications 1 à 12, caractérisé par au moins deux rotors, délimitant ensemble un intervalle d'introduction, à partir des disques dentés (20).

14. Dispositif selon au moins l'une des revendications 1 à 13, caractérisé en ce qu'il est associé, en tant qu'organe de broyage (10), à un organe de transport (80,83) d'un tas de compost (74).

15. Dispositif selon au moins l'une des revendications 1 à 14, caractérisé en ce qu'il est monté, en tant qu'organe de broyage (10) en amont d'un pont de compost (76) mobile, surplombant un tas de compost (74), et/ou en ce qu'au moins une broche creuse (88) perforée fait saillie dans le tas de compost (74) depuis le pont de compost (76), laquelle broche est raccordée par son extrémité supérieure à une conduite de liquide et/ou d'air (91,93).
